# EUROPEAN PATENT SPECIFICATION

(11) **EP 3 904 015 B1**
(45) Date of publication and mention of the grant of the patent: **28.12.2022**
(21) Application number: 21171593.3
(22) Date of filing: 30.04.2021
(51) Int. Cl.: B25J 9/16

(54) **SYSTEM AND METHOD FOR SETTING UP A ROBOTIC ASSEMBLY OPERATION**
SYSTEM UND VERFAHREN ZUR EINRICHTUNG DES BETRIEBS EINER ROBOTISCHEN ANORDNUNG
SYSTÈME ET PROCÉDÉ D'ÉTABLISSEMENT D'UNE OPÉRATION D'ENSEMBLE ROBOTIQUE

(30) Priority: 01.05.2020 US 202016864798
(43) Date of publication of application: 03.11.2021
(73) Proprietor: ABB Schweiz AG, 5400 Baden (CH)
(72) Inventor: ZHANG, Biao, Apex, 27539 (US); SHARMA, Saumya, Hartford, 06103 (US); LIU, Yixin, New Britain, 06052 (US); WANG, Jianjun, West Hartford, 06117 (US); EAKINS, Will, Coventry, 06238 (US); SALM, Andrew M., West Hartford, 06117 (US); SU, Yun Hsuan, Seattle, 98105 (US); VIDAL-RIBAS, Jorge, 4314 Sant Cugat des Valles (ES); ARTIGAS, Jordi, 08042 Barcelona (ES); CASANELLES, Ramon, 08173 Sant Cugat des Valles (ES)
(74) Representative: Zimmermann & Partner Patentanwälte mbB

(56) References cited:
- EP-A1- 3 476 549
- EP-A2- 1 525 953
- WO-A1-2019/113618
- US-A1- 2020 078 945

## Description

### FIELD OF INVENTION

The present invention relates to robotic calibration and control system tuning, and more particularly, to a system and method for use of robotic assembly systems involving a moving robot base and moving assembly base.

### BACKGROUND

A variety of operations can be performed during the final trim and assembly (FTA) stage of automotive assembly, including, for example, door assembly, cockpit assembly, and seat assembly, among other types of assemblies. Yet, for a variety of reasons, only a relatively small number of FTA tasks are typically automated. For example, often during the FTA stage, while an operator is performing an FTA operation, the vehicle(s) undergoing FTA is/are being transported on a line(s) that is/are moving the vehicle(s) in a relatively continuous manner. Yet such continuous motions of the vehicle(s) can cause or create certain irregularities with respect to at least the movement and/or position of the vehicle(s), and/or the portions of the vehicle(s) that are involved in the FTA. Moreover, such motion can cause the vehicle to be subjected to movement irregularities, vibrations, and balancing issues during FTA, which can prevent, or be adverse to, the ability to accurately model or predict the location of a particular part, portion, or area of the vehicle directly involved in the FTA. Further, such movement irregularities can prevent the FTA from having a consistent degree of repeatability in terms of the movement and/or positioning of each vehicle, or its associated component, as each subsequent vehicle and/or component passes along the same area of the assembly line. Accordingly, such variances and concerns regarding repeatability can often preclude the use of traditional teach and repeat position based robot motion control in FTA operations.

Accordingly, although various robot control systems are available currently in the marketplace, further improvements are possible to provide a system and means to calibrate and tune the robot control system to accommodate such movement irregularities.

EP 1 525 953 A2 relates to a correction data checking system for robots.

### BRIEF SUMMARY

The invention is set out in the appended set of claims. Any combination of features that do not fall under scope of the appended claims is not part of the invention,

A robotic assembly operation is described for assembling parts together. During setup of the assembly operation, control parameters and a control scheme are set and changed by simulating the operation and testing whether performance requirements are met. A dry run may be performed and test data collected after running the simulation to determine if the performance requirements are satisfied during the dry run. During production, production data may also be collected and control parameters may be tuned when changes occur during production in order to maintain stable assembly. These and other aspects of the present invention will be better understood in view of the drawings and following detailed description.

### BRIEF DESCRIPTION OF THE DRAWINGS

The description herein makes reference to the accompanying figures wherein like reference numerals refer to like parts throughout the several views.
Figure 1 illustrates a schematic representation of at least a portion of an exemplary robotic system according to an illustrated embodiment of the present application.
Figure 2 illustrates a schematic representation of an exemplary robot station through which vehicles are moved through by an automated or automatic guided vehicle (AGV), and which includes a robot that is mounted to a robot base that is moveable along, or by, a track.
Figure 3 illustrates sensor inputs that may be used to control movement of a robot.
Figure 4 illustrates an assembly line with a moving assembly base and a moving robot base.
Figure 5 illustrates compensations that may be used to control movement of a robot.
Figure 6 illustrates aligning a second part to a first part to assemble the two parts together.
Figure 7 illustrates a flow chart for a robotic assembly operation.

The foregoing summary, as well as the following detailed description of certain embodiments of the present application, will be better understood when read in conjunction with the appended drawings. For the purpose of illustrating the application, there is shown in the drawings, certain embodiments. It should be understood, however, that the present application is not limited to the arrangements and instrumentalities shown in the attached drawings. Further, like numbers in the respective figures indicate like or comparable parts.

### DESCRIPTION OF THE ILLUSTRATED EMBODIMENTS

Certain terminology is used in the foregoing description for convenience and is not intended to be limiting. Words such as "upper," "lower," "top," "bottom," "first," and "second" designate directions in the drawings to which reference is made. This terminology includes the words specifically noted above, derivatives thereof, and words of similar import. Additionally, the words "a" and "one" are defined as including one or more of the referenced item unless specifically noted. The phrase "at least one of' followed by a list of two or more items, such as "A, B or C," means any individual one of A, B or C, as well as any combination thereof.

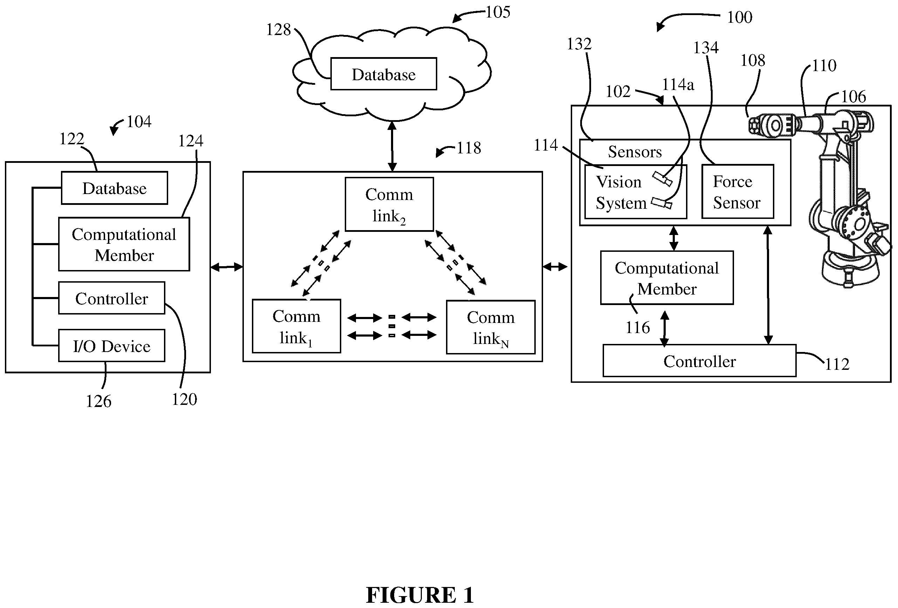

Figure 1 illustrates at least a portion of an exemplary robotic system 100 that includes at least one robot station 102 that is communicatively coupled to at least one management system 104, such as, for example, via a communication network or link 118. The management system 104 can be local or remote relative to the robot station 102. Further, according to certain embodiments, the management system 104 can be cloud based. Further, according to certain embodiments, the robot station 102 can also include, or be in operable communication with, one or more supplemental database systems 105 via the communication network or link 118. The supplemental database system(s) 105 can have a variety of different configurations. For example, according to the illustrated embodiment, the supplemental database system(s) 105 can be, but is not limited to, a cloud based database.

According to certain embodiments, the robot station 102 includes one or more robots 106 having one or more degrees of freedom. For example, according to certain embodiments, the robot 106 can have, for example, six degrees of freedom. According to certain embodiments, an end effector 108 can be coupled or mounted to the robot 106. The end effector 108 can be a tool, part, and/or component that is mounted to a wrist or arm 110 of the robot 106. Further, at least portions of the wrist or arm 110 and/or the end effector 108 can be moveable relative to other portions of the robot 106 via operation of the robot 106 and/or the end effector 108, such for, example, by an operator of the management system 104 and/or by programming that is executed to operate the robot 106.

The robot 106 can be operative to position and/or orient the end effector 108 at locations within the reach of a work envelope or workspace of the robot 106, which can accommodate the robot 106 in utilizing the end effector 108 to perform work, including, for example, grasp and hold one or more components, parts, packages, apparatuses, assemblies, or products, among other items (collectively referred to herein as "components"). A variety of different types of end effectors 108 can be utilized by the robot 106, including, for example, a tool that can grab, grasp, or otherwise selectively hold and release a component that is utilized in a final trim and assembly (FTA) operation during assembly of a vehicle, among other types of operations.

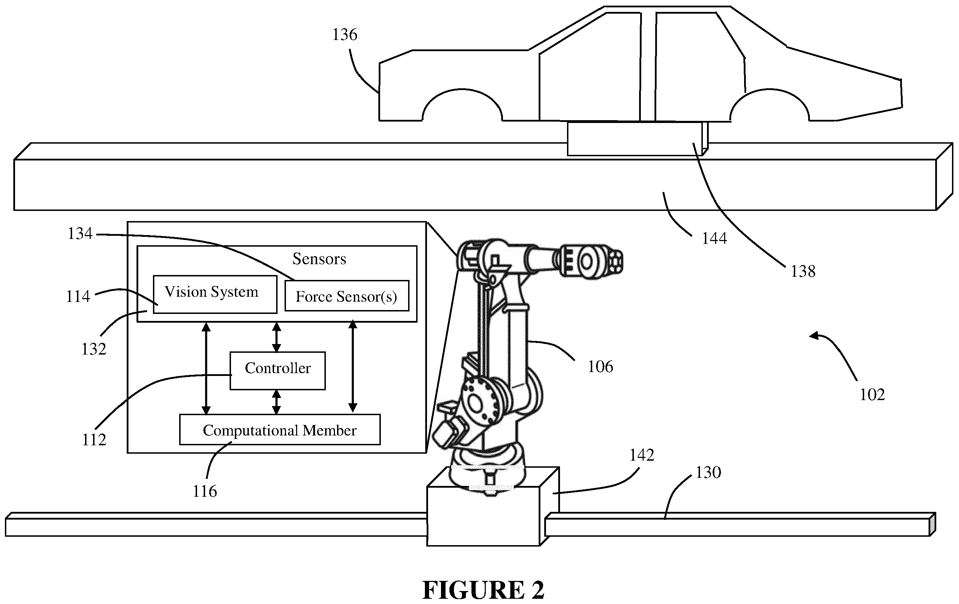

The robot 106 can include, or be electrically coupled to, one or more robotic controllers 112. For example, according to certain embodiments, the robot 106 can include and/or be electrically coupled to one or more controllers 112 that may, or may not, be discrete processing units, such as, for example, a single controller or any number of controllers. The controller 112 can be configured to provide a variety of functions, including, for example, be utilized in the selective delivery of electrical power to the robot 106, control of the movement and/or operations of the robot 106, and/or control the operation of other equipment that is mounted to the robot 106, including, for example, the end effector 108, and/or the operation of equipment not mounted to the robot 106 but which are an integral to the operation of the robot 106 and/or to equipment that is associated with the operation and/or movement of the robot 106. Moreover, according to certain embodiments, the controller 112 can be configured to dynamically control the movement of both the robot 106 itself, as well as the movement of other devices to which the robot 106 is mounted or coupled, including, for example, among other devices, movement of the robot 106 along, or, alternatively, by, a track 130 or mobile platform such as the AGV to which the robot 106 is mounted via a robot base 142, as shown in Figure 2.

The controller 112 can take a variety of different forms, and can be configured to execute program instructions to perform tasks associated with operating the robot 106, including to operate the robot 106 to perform various functions, such as, for example, but not limited to, the tasks described herein, among other tasks. In one form, the controller(s) 112 is/are microprocessor based and the program instructions are in the form of software stored in one or more memories. Alternatively, one or more of the controllers 112 and the program instructions executed thereby can be in the form of any combination of software, firmware and hardware, including state machines, and can reflect the output of discreet devices and/or integrated circuits, which may be co-located at a particular location or distributed across more than one location, including any digital and/or analog devices configured to achieve the same or similar results as a processor-based controller executing software or firmware based instructions. Operations, instructions, and/or commands determined and/or transmitted from the controller 112 can be based on one or more models stored in non-transient computer readable media in a controller 112, other computer, and/or memory that is accessible or in electrical communication with the controller 112.

According to the illustrated embodiment, the controller 112 includes a data interface that can accept motion commands and provide actual motion data. For example, according to certain embodiments, the controller 112 can be communicatively coupled to a pendant, such as, for example, a teach pendant, that can be used to control at least certain operations of the robot 106 and/or the end effector 108.

The robot station 102 and/or the robot 106 can also include one or more sensors 132. The sensors 132 can include a variety of different types of sensors and/or combinations of different types of sensors, including, but not limited to, a vision system 114, force sensors 134, motion sensors, acceleration sensors, and/or depth sensors, among other types of sensors. Further, information provided by at least some of these sensors 132 can be integrated, including, for example, via use of algorithms, such that operations and/or movement, among other tasks, by the robot 106 can at least be guided via sensor fusion. Thus, as shown by at least Figures 1 and 2, information provided by the one or more sensors 132, such as, for example, a vision system 114 and force sensors 134, among other sensors 132, can be processed by a controller 120 and/or a computational member 124 of a management system 104 such that the information provided by the different sensors 132 can be combined or integrated in a manner that can reduce the degree of uncertainty in the movement and/or performance of tasks by the robot 106.

According to the illustrated embodiment, the vision system 114 can comprise one or more vision devices 114a that can be used in connection with observing at least portions of the robot station 102, including, but not limited to, observing, parts, component, and/or vehicles, among other devices or components that can be positioned in, or are moving through or by at least a portion of, the robot station 102. For example, according to certain embodiments, the vision system 114 can extract information for a various types of visual features that are positioned or placed in the robot station 102, such, for example, on a vehicle and/or on automated guided vehicle (AGV) that is moving the vehicle through the robot station 102, among other locations, and use such information, among other information, to at least assist in guiding the movement of the robot 106, movement of the robot 106 along a track 130 or mobile platform such as the AGV (Figure 2) in the robot station 102, and/or movement of an end effector 108. Further, according to certain embodiments, the vision system 114 can be configured to attain and/or provide information regarding at a position, location, and/or orientation of one or more calibration features that can be used to calibrate the sensors 132 of the robot 106.

According to certain embodiments, the vision system 114 can have data processing capabilities that can process data or information obtained from the vision devices 114a that can be communicated to the controller 112. Alternatively, according to certain embodiments, the vision system 114 may not have data processing capabilities. Instead, according to certain embodiments, the vision system 114 can be electrically coupled to a computational member 116 of the robot station 102 that is adapted to process data or information outputted from the vision system 114. Additionally, according to certain embodiments, the vision system 114 can be operably coupled to a communication network or link 118, such that information outputted by the vision system 114 can be processed by a controller 120 and/or a computational member 124 of a management system 104, as discussed below.

Examples of vision devices 114a of the vision system 114 can include, but are not limited to, one or more imaging capturing devices, such as, for example, one or more two-dimensional, three-dimensional, and/or RGB cameras that can be mounted within the robot station 102, including, for example, mounted generally above the working area of the robot 106, mounted to the robot 106, and/or on the end effector 108 of the robot 106, among other locations. Further, according to certain embodiments, the vision system 114 can be a position based or image based vision system. Additionally, according to certain embodiments, the vision system 114 can utilize kinematic control or dynamic control.

According to the illustrated embodiment, in addition to the vision system 114, the sensors 132 also include one or more force sensors 134. The force sensors 134 can, for example, be configured to sense contact force(s) during the assembly process, such as, for example, a contact force between the robot 106, the end effector 108, and/or a component being held by the robot 106 with the vehicle 136 and/or other component or structure within the robot station 102. Such information from the force sensor(s) 134 can be combined or integrated with information provided by the vision system 114 such that movement of the robot 106 during assembly of the vehicle 136 is guided at least in part by sensor fusion.

According to the exemplary embodiment depicted in Figure 1, the management system 104 can include at least one controller 120, a database 122, the computational member 124, and/or one or more input/output (I/O) devices 126. According to certain embodiments, the management system 104 can be configured to provide an operator direct control of the robot 106, as well as to provide at least certain programming or other information to the robot station 102 and/or for the operation of the robot 106. Moreover, the management system 104 can be structured to receive commands or other input information from an operator of the robot station 102 or of the management system 104, including, for example, via commands generated via operation or selective engagement of/with an input/output device 126. Such commands via use of the input/output device 126 can include, but is not limited to, commands provided through the engagement or use of a microphone, keyboard, touch screen, joystick, stylus-type device, and/or a sensing device that can be operated, manipulated, and/or moved by the operator, among other input/output devices. Further, according to certain embodiments, the input/output device 126 can include one or more monitors and/or displays that can provide information to the operator, including, for, example, information relating to commands or instructions provided by the operator of the management system 104, received/transmitted from/to the supplemental database system(s) 105 and/or the robot station 102, and/or notifications generated while the robot 106 is running (or attempting to run) a program or process. For example, according to certain embodiments, the input/output device 126 can display images, whether actual or virtual, as obtained, for example, via use of at least the vision device 114a of the vision system 114.

According to certain embodiments, the management system 104 can include any type of computing device having a controller 120, such as, for example, a laptop, desktop computer, personal computer, programmable logic controller (PLC), or a mobile electronic device, among other computing devices, that includes a memory and a processor sufficient in size and operation to store and manipulate a database 122 and one or more applications for at least communicating with the robot station 102 via the communication network or link 118. In certain embodiments, the management system 104 can include a connecting device that may communicate with the communication network or link 118 and/or robot station 102 via an Ethernet WAN/LAN connection, among other types of connections. In certain other embodiments, the management system 104 can include a web server, or web portal, and can use the communication network or link 118 to communicate with the robot station 102 and/or the supplemental database system(s) 105 via the internet.

The management system 104 can be located at a variety of locations relative to the robot station 102. For example, the management system 104 can be in the same area as the robot station 102, the same room, a neighboring room, same building, same plant location, or, alternatively, at a remote location, relative to the robot station 102. Similarly, the supplemental database system(s) 105, if any, can also be located at a variety of locations relative to the robot station 102 and/or relative to the management system 104. Thus, the communication network or link 118 can be structured, at least in part, based on the physical distances, if any, between the locations of the robot station 102, management system 104, and/or supplemental database system(s) 105. According to the illustrated embodiment, the communication network or link 118 comprises one or more communication links 118 (Comm link_{1-N} in Figure 1). Additionally, the system 100 can be operated to maintain a relatively reliable real-time communication link, via use of the communication network or link 118, between the robot station 102, management system 104, and/or supplemental database system(s) 105. Thus, according to certain embodiments, the system 100 can change parameters of the communication link 118, including, for example, the selection of the utilized communication links 118, based on the currently available data rate and/or transmission time of the communication links 118.

The communication network or link 118 can be structured in a variety of different manners. For example, the communication network or link 118 between the robot station 102, management system 104, and/or supplemental database system(s) 105 can be realized through the use of one or more of a variety of different types of communication technologies, including, but not limited to, via the use of fiber-optic, radio, cable, or wireless based technologies on similar or different types and layers of data protocols. For example, according to certain embodiments, the communication network or link 118 can utilize an Ethernet installation(s) with wireless local area network (WLAN), local area network (LAN), cellular data network, Bluetooth, ZigBee, point-to-point radio systems, laser-optical systems, and/or satellite communication links, among other wireless industrial links or communication protocols.

The database 122 of the management system 104 and/or one or more databases 128 of the supplemental database system(s) 105 can include a variety of information that may be used in the identification of elements within the robot station 102 in which the robot 106 is operating. For example, as discussed below in more detail, one or more of the databases 122, 128 can include or store information that is used in the detection, interpretation, and/or deciphering of images or other information detected by a vision system 114, such as, for example, features used in connection with the calibration of the sensors 132. Additionally, or alternatively, such databases 122, 128 can include information pertaining to the one or more sensors 132, including, for example, information pertaining to forces, or a range of forces, that are to be expected to be detected by via use of the one or more force sensors 134 at one or more different locations in the robot station 102 and/or along the vehicle 136 at least as work is performed by the robot 106. Additionally, information in the databases 122, 128 can also include information used to at least initially calibrate the one or more sensors 132, including, for example, first calibration parameters associated with first calibration features and second calibration parameters that are associated with second calibration features.

The database 122 of the management system 104 and/or one or more databases 128 of the supplemental database system(s) 105 can also include information that can assist in discerning other features within the robot station 102. For example, images that are captured by the one or more vision devices 114a of the vision system 114 can be used in identifying, via use of information from the database 122, FTA components within the robot station 102, including FTA components that are within a picking bin, among other components, that may be used by the robot 106 in performing FTA.

Figure 2 illustrates a schematic representation of an exemplary robot station 102 through which vehicles 136 are moved by an automated or automatic guided vehicle (AGV) 138, and which includes a robot 106 that is mounted to a robot base 142 that is moveable along, or by, a track 130 or mobile platform such as the AGV. While for at least purposes of illustration, the exemplary robot station 102 depicted in Figure 2 is shown as having, or being in proximity to, a vehicle 136 and associated AGV 138, the robot station 102 can have a variety of other arrangements and elements, and can be used in a variety of other manufacturing, assembly, and/or automation processes. As depicted, the AGV may travel along a track 144, or may alternatively travel along the floor on wheels or may travel along an assembly route in other known ways. Further, while the depicted robot station 102 can be associated with an initial set-up of a robot 106, the station 102 can also be associated with use of the robot 106 in an assembly and/or production process.

Additionally, while the example depicted in Figure 2 illustrates a single robot station 102, according to other embodiments, the robot station 102 can include a plurality of robot stations 102, each station 102 having one or more robots 106. The illustrated robot station 102 can also include, or be operated in connection with, one or more AGV 138, supply lines or conveyors, induction conveyors, and/or one or more sorter conveyors. According to the illustrated embodiment, the AGV 138 can be positioned and operated relative to the one or more robot stations 102 so as to transport, for example, vehicles 136 that can receive, or otherwise be assembled with or to include, one or more components of the vehicle(s) 136, including, for example, a door assembly, a cockpit assembly, and a seat assembly, among other types of assemblies and components. Similarly, according to the illustrated embodiment, the track 130 can be positioned and operated relative to the one or more robots 106 so as to facilitate assembly by the robot(s) 106 of components to the vehicle(s) 136 that is/are being moved via the AGV 138. Moreover, the track 130 or mobile platform such as the AGV, robot base 142, and/or robot can be operated such that the robot 106 is moved in a manner that at least generally follows of the movement of the AGV 138, and thus the movement of the vehicle(s) 136 that are on the AGV 138. Further, as previously mentioned, such movement of the robot 106 can also include movement that is guided, at least in part, by information provided by the one or more force sensor(s) 134.

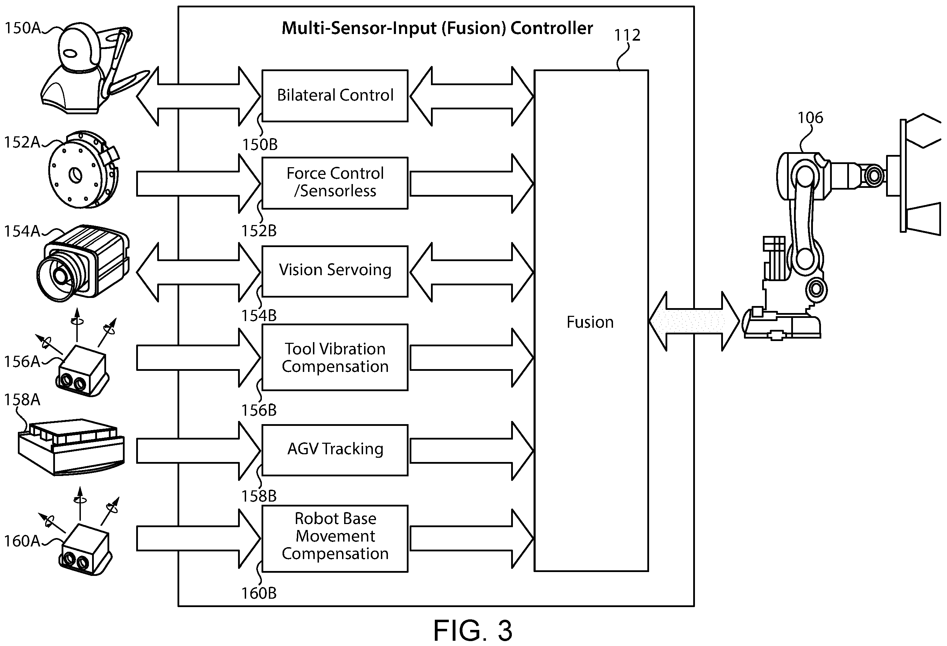

Figure 3 is an illustration of sensor inputs 150-160 that may be provided to the robot controller 112 in order to control robot 106 movement. For example, the robotic assembly system may be provided with a bilateral control sensor 150A in communication with a bilateral controller 150B. A force sensor 152A (or 134) may also be provided in communication with a force controller 152B. A camera 154A (or 114A) may also be provided in communication with a vision controller 154B (or 114). A vibration sensor 156A may also be provided in communication with a vibration controller 156B. An AGV tracking sensor 158A may also be provided in communication with a tracking controller 158B. A robot base movement sensor 160A may also be provided in communication with a compensation controller 160B. Each of the individual sensor inputs 150-160 communicate with the robot controller 112 and may be fused together to control movement of the robot 106.

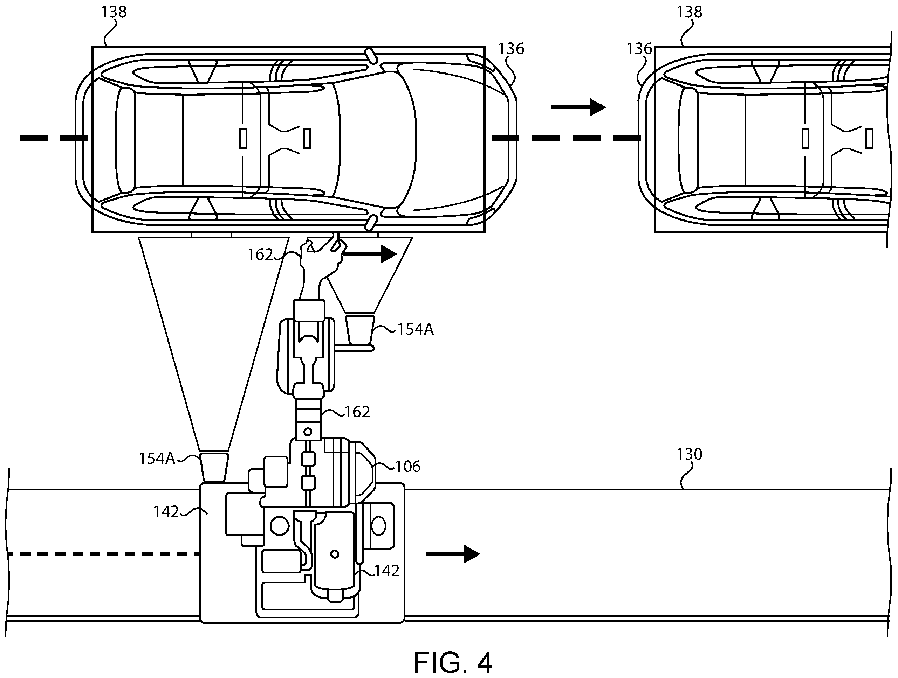

Figure 4 is another illustration of an embodiment of a robot base 142 with a robot 106 mounted thereon. The robot base 142 may travel along a rail 130 or with wheels along the floor to move along the assembly line defined by the assembly base 138 (or AGV 138). The robot 106 has at least one movable arm 162 that may move relative to the robot base 142, although it is preferable for the robot 106 to have multiple movable arms 162 linked by joints to provide a high degree of movement flexibility.

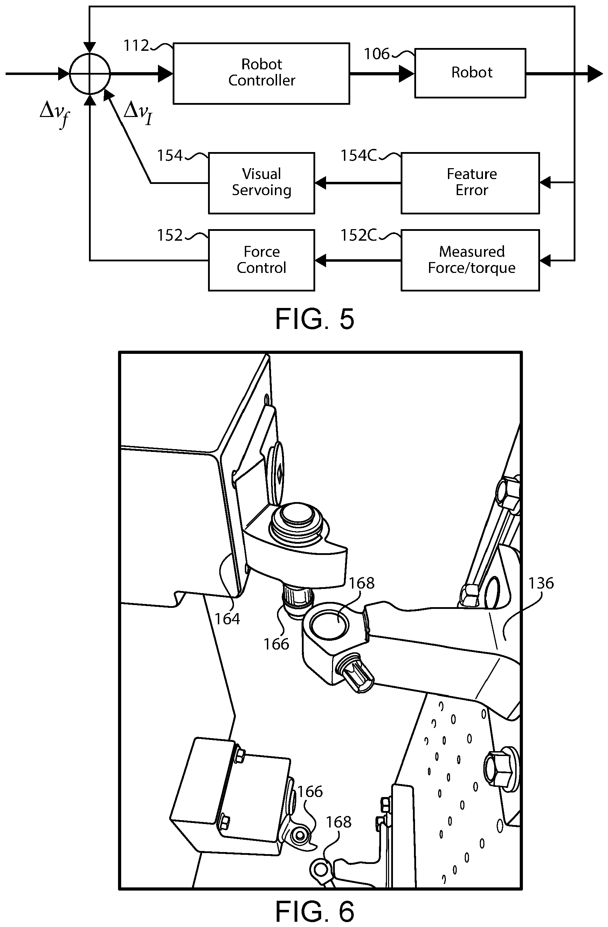

Figure 5 is an illustration showing how movement of the robot 106 may be compensated based on inputs from the sensors. For example, the vision system 154 may be used to determine errors in feature locations which may be used in feature location compensations 154C. The force control system 152 may also be used to determine the force and/or torque applied to the end effector or movable arm or joint and may be used in force/torque compensations 152C. It is understood that any of the inputs 150-160 identified in Figure 3 could be used in a similar manner in addition to other sensor inputs used for controlling movement of the robot 106.

Figure 6 is an illustration of the robot 106 aligning a second part 164 (e.g., a vehicle door 164) with a first part 136 (e.g., a vehicle body 136) to assemble the two together. For example, the second part 164 may have pins 166 that must be aligned with holes 168 in the first part 136 so that the second part 164 may be lowered to insert the pins 166 into the holes 168. This can be particularly difficult for a robotic assembly operation where the first part 136 is on a moving assembly base 138 and the second part 164 is on a moving robotic base 142.

The inventions described herein involve a method and system to choose a control scheme with initial control parameters for an assembly process during setup according to application requirements (e.g., with performance requirements). It usually takes a long time for engineers to tune control parameters with a selected control scheme based on empirical experience. The described inventions provide an automatic approach to arrive at a stable assembly system with a tolerant control parameter range during setup. With the initial inputs (e.g., control parameters), the system can select the best fit control scheme with suitable control parameters through simulation and dry run data analysis during the setup based on performance requirements. For multiple stages of an assembly task, the system can determine a control scheme with initial control parameter sets for each stage that are defined by way points. The combined control schemes for the whole assembly process may be tested during a dry run.

During setup, the control scheme with initial control parameters can be automatically determined based on the performance requirements. The control parameter inputs may include sensor characteristics (sampling rate, accuracy, noise, delay, etc.), robot information (robot model, tool payload, etc.) and application task specifications (path, way points, etc.). The performance requirements may include target moving speed, acceleration, assembly tolerance, cycle time, etc. Through simulation and dry run data analysis, a proper control scheme (e.g., 2D vs. 3D vision based, image based, using Kalman filter, etc.) and initial control parameters can be selected to minimize or compensate the computation, communication or/and robot response delays for fast and robust assembly. For each stage of the assembly process, a control scheme with suitable control parameter sets can be determined based on the stage specifications. The system can also change the inputs (delay time, robot motion, etc.) based on the dry run.

The inventions described herein also involve a method and system to dynamically tune control parameters with a selected control scheme during production runs of the robotic assembly operation. During a production run, the system calibration can drift over time or a minor collision may occur. In such a situation where something changes in the system, it is important to dynamically tune the control parameters accordingly to adjust and compensate for the changes to maintain a stable assembly operation. With the initial system from the setup, production data may continue to be collected over time and compared with historic data from each production run. If anything changes (e.g., contact force increase, tracking error increase, settling time increase, etc.), the system can automatically tune the control parameters during production to compensate for the change and adjust assembly performance.

During production runs of a robotic assembly operation, the system may continuously collect and store production data over time. The production data may include robot speed, acceleration, positon, tracking error, delay, contact force, settling time, etc. After each production run, the system can compare the collected production data with historic production data to identify if anything has changed in the system. The system can then tune the control parameters dynamically during the production runs instead of stopping the assembly and recalibrating the system in a new setup. This feature is especially useful when something changes during production (e.g., the system drifts over time or a minor collision happens). Thus, time may be saved by not interrupting the assembly line while still maintaining stable assembly.

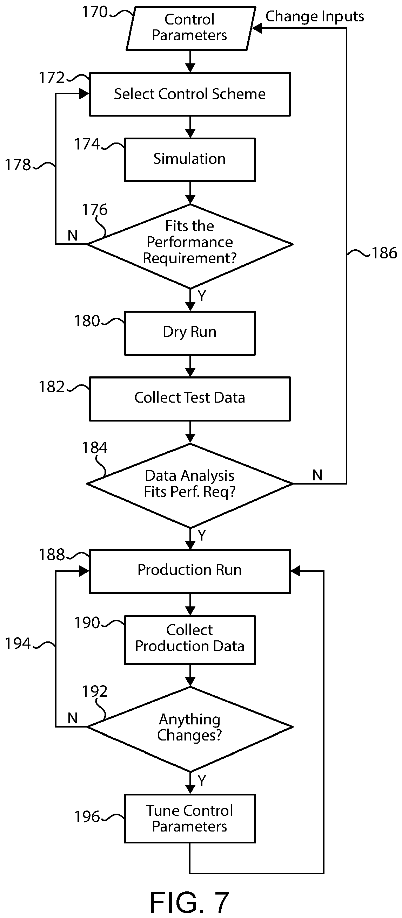

As illustrated in Figure 7, a method for determining a control system for a robotic assembly operation may include the steps of selecting one or more control parameters (170), selecting a control scheme (172), simulating performance of the robotic assembly operation using the one or more control parameters and the control scheme (174), determining whether the control scheme satisfies a performance requirement from a result of the simulation (176), and repeating steps (172)-(176) with a new control scheme if the performance requirement is not satisfied (178). The one or more control parameters may include a sensor characteristic, a robot characteristic or an application task specification. The sensor characteristic may include a sampling rate, an accuracy, a noise or a delay. The robot characteristic may include a robot model or a tool payload. The application task specification may include a path or way points. The one or more control parameters may also include a delay time or a robot motion. The control scheme may include a 2D vision system, a 3D vision system, an image based vision system or a Kalman filter guidance system. The performance requirement may include a speed, an acceleration, an assembly tolerance or a cycle time.

The method may also include the steps of operating the robotic assembly operation in a dry run if the control scheme satisfies the performance requirement (180), collecting test data on the dry run (182), and determining if the test data satisfies the performance requirement (184). The one or more control parameters may also be changed and steps (170)-(184) may also be repeated if the test data does not satisfy the performance requirement (186).

The method may also include the steps of operating the robotic assembly operation in a production run if the control scheme satisfies the performance requirement (188), collecting production data on the production run (190), and analyzing the production data and determining if the production data satisfies the performance requirement (192). Additionally, at step 192, it is possible that machine learning or deep learning can be used to detect or predict any anomalies of the production performance change. Steps (188)-(192) may also be repeated without changing the one or more control parameters if the production data satisfies the performance requirement (194). The one or more control parameters, such as the weights applied to the fusion multi-camera inputs 154A, force sensor input 152A, IMU sensor input 156A, etc., may also be changed and steps (188)-(192) may also be repeated if the production data does not satisfy the performance requirement and repeating steps (196). The production data may include robot 106 speed, acceleration, position, tracking error, contact force or settling time. The method may also include the steps of collecting production data on two iterations of the production run (190), and determining if the production data varies between the two production runs (192). The production run may be repeated without changing the one or more control parameters if the production data varies by less than a threshold (194). The one or more control parameters may also be changed and the production run repeated if the production data varies by more than the threshold (196). Additionally, at step 192, machine learning or deep learning can be used to detect or predict an anomaly of sensor inputs, such as one of the vision sensors 154A being out of calibration due to a minor collision. As a result, the weighting applied to the out of calibration sensor 154A mounted on the robot tool can be reduced, and the weighting used for another vision sensor 154A mounted on the robot base and force sensor 152A can be increased. By tuning these parameters, the production performance can be recovered to a normal range. If desired, the out of calibration vision sensor can then be recalibrated during a break between shifts of production. The method illustrated in Figure 7 using artificial intelligence (e.g., machine learning or deep learning) to detect an anomaly and guide parameter tuning of multi-sensor inputs to control movement of a robot may improve the reliability and robustness of production.

The robotic assembly operation may also include an assembly base 138 with a first part 136 thereon and a robotic base 142 with a second part 164 thereon, and the control system may assemble the second part 164 with the first part 136 while the assembly base 138 and the robotic base 142 are both moving.

While the invention has been described in connection with what is presently considered to be the most practical and preferred embodiment, it is to be understood that the invention is limited to the scope of the appended claims. Furthermore it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. A method for determining a control system for a robotic assembly operation, comprising:
a) automatically selecting one or more control parameters (170);
b) automatically selecting a control scheme (172);
c) simulating performance of the robotic assembly operation using the one or more control parameters and the control scheme (174);
d) automatically determining whether the control scheme satisfies a performance requirement from a result of the simulation (176);
e) repeating steps (b)-(d) with a new control scheme if the performance requirement is not satisfied (178);
the method further comprising:
j) operating the robotic assembly operation in a production run if the control scheme satisfies the performance requirement (188);
k) collecting production data on two iterations of the production run (190);
l) determining if the production data varies between the two production runs (192);
m) repeating the production run without changing the one or more control parameters if the production data varies by less than a threshold (194);
n) changing the one or more control parameters if the production data varies by more than the threshold and repeating the production run (196),
wherein changing the one or more control parameters comprises reducing the weighting applied to an out of calibration sensor (132) and increasing the weighting applied to another sensor (132).

2. The method according to claim 1, further comprising:
f) operating the robotic assembly operation in a dry run if the control scheme satisfies the performance requirement (180);
g) collecting test data on the dry run (182); and
h) determining if the test data satisfies the performance requirement (184).

3. The method according to claim 2, further comprising:
i) changing the one or more control parameters if the test data does not satisfy the performance requirement and repeating steps (a)-(h) (186).

4. The method according to claim 3, further comprising:
j) operating the robotic assembly operation in a production run if the control scheme satisfies the performance requirement (188);
k) collecting production data on the production run (190); and
l) determining if the production data satisfies the performance requirement (192).

5. The method according to claim 4, further comprising:
m) repeating steps (j)-(l) without changing the one or more control parameters if the production data satisfies the performance requirement (194).

6. The method according to claim 5, further comprising:
n) changing the one or more control parameters if the production data does not satisfy the performance requirement and repeating steps (j)-(l) (196).

7. The method according to any one of the preceding claims, further comprising:
j) operating the robotic assembly operation in a production run if the control scheme satisfies the performance requirement (188);
k) collecting production data on the production run (190); and
l) determining if the production data satisfies the performance requirement (192), preferably
wherein production data comprises a robot (106) speed, an acceleration, a position, a tracking error, a contact force or a settling time.

8. The method according to claim 7, further comprising:
m) repeating steps (j)-(l) without changing the one or more control parameters if the production data satisfies the performance requirement (194).

9. The method according to claim 8, further comprising:
n) changing the one or more control parameters if the production data does not satisfy the performance requirement and repeating steps (j)-(l) (196).

10. The method according to any one of the preceding claims, wherein at least one of the following (A) to (E):
(A) the robotic assembly operation comprises an assembly base (138) with a first part (136) thereon and a robotic base (142) with a second part (164) thereon, the control system assembling the second part with the first part while the assembly base and the robotic base are both moving;
(B): the one or more control parameters comprises a sensor characteristic, a robot characteristic or an application task specification;
(C): the sensor characteristic comprises a sampling rate, an accuracy, a noise or a delay, the robot characteristic comprises a robot model or a tool payload and the application task specification comprises a path or way points;
(D): the one or more control parameters comprises a delay time or a robot motion; and/or
(E): the control scheme comprises a 2D vision system, a 3D vision system, an image based vision system or a Kalman filter guidance system.

11. The method according to any one of the preceding claims, wherein the performance requirement comprises a speed, an acceleration, an assembly tolerance or a cycle time.

12. The method according to claim 11, wherein the robotic assembly operation comprises an assembly base (138) with a first part (136) thereon and a robotic base (142) with a second part (164) thereon, the control system assembling the second part with the first part while the assembly base and the robotic base are both moving, the one or more control parameters comprises a sensor characteristic, a robot characteristic or an application task specification, and the control scheme comprises a 2D vision system, a 3D vision system, an image based vision system or a Kalman filter guidance system.

## Patentansprüche

1. Verfahren zum Bestimmen eines Steuerungssystems für einen robotischen Montagebetrieb, umfassend:
a) automatisches Auswählen eines oder mehrerer Steuerungsparameter (170);
b) automatisches Auswählen eines Steuerungsschemas (172)
c) Simulieren der Leistung des robotischen Montagebetriebs unter Verwendung des einen oder der mehreren Steuerungsparameter und des Steuerungsschemas (174);
d) automatisches Bestimmen, ob das Steuerungsschema eine Leistungsanforderung erfüllt, anhand eines Ergebnisses der Simulation (176);
e) Wiederholung der Schritte (b)-(d) mit einem neuen Steuerungsschema, wenn die Leistungsanforderung nicht erfüllt ist (178);
wobei das Verfahren ferner umfasst:
j) Betreiben des robotischen Montagebetriebs in einem Produktionslauf, wenn das Steuerungsschema die Leistungsanforderung erfüllt (188);
k) Sammeln von Produktionsdaten bei zwei Iterationen des Produktionslaufs (190);
l) Bestimmen, ob die Produktionsdaten zwischen den beiden Produktionsläufen variieren (192);
m) Wiederholen des Produktionslaufs ohne Änderung des einen oder der mehreren Steuerungsparameter, wenn die Produktionsdaten um weniger als einen Schwellenwert (194) variieren;
n) Ändern des einen oder der mehreren Steuerungsparameter, wenn die Produktionsdaten um mehr als den Schwellenwert variieren, und Wiederholen des Produktionslaufs (196),
wobei das Ändern des einen oder der mehreren Steuerungsparameter ein Reduzieren der auf einen nicht kalibrierten Sensor (132) angewandten Gewichtung und eine Erhöhung der auf einen anderen Sensor (132) angewandten Gewichtung umfasst.

2. Verfahren nach Anspruch 1, ferner umfassend:
f) Betreiben des robotischen Montagebetriebs in einem Trockenlauf, wenn die Steuerung die Leistungsanforderung (180) erfüllt;
g) Sammeln von Testdaten über den Trockenlauf (182); und
h) Bestimmen, ob die Testdaten die Leistungsanforderung erfüllen (184).

3. Verfahren nach Anspruch 2, ferner umfassend:
i) Ändern des einen oder der mehreren Steuerungsparameter, wenn die Testdaten die Leistungsanforderung nicht erfüllen, und Wiederholen der Schritte (a)-(h) (186).

4. Verfahren nach Anspruch 3, ferner umfassend:
j) Betreiben des robotischen Montagebetriebs in einem Produktionslauf, wenn das Steuerungsschema die Leistungsanforderung erfüllt (188);
k) Sammeln von Produktionsdaten über den Produktionslauf (190); und
l) Bestimmen, ob die Produktionsdaten die Leistungsanforderung erfüllen (192).

5. Verfahren nach Anspruch 4, ferner umfassend:
m) Wiederholen der Schritte (j)-(l) ohne Ändern des einen oder der mehreren Steuerungsparameter, wenn die Produktionsdaten die Leistungsanforderung (194) erfüllen.

6. Verfahren nach Anspruch 5, ferner umfassend:
n) Ändern des einen oder der mehreren Steuerungsparameter, wenn die Produktionsdaten die Leistungsanforderung nicht erfüllen, und Wiederholen der Schritte (j)-(l) (196).

7. Verfahren nach einem der vorhergehenden Ansprüche, ferner umfassend:
j) Betreiben des robotischen Montagebetriebs in einem Produktionslauf, wenn die Steuerung die Leistungsanforderung (188) erfüllt;
k) Sammeln von Produktionsdaten über den Produktionslauf (190); und
l) Bestimmen, ob die Produktionsdaten die Leistungsanforderung erfüllen (192), vorzugsweise
wobei die Produktionsdaten eine Geschwindigkeit des Roboters (106), eine Beschleunigung, eine Position, einen Spurfehler, eine Kontaktkraft oder eine Einschwingzeit umfassen.

8. Verfahren nach Anspruch 7, ferner umfassend:
m) Wiederholen der Schritte (j)-(l) ohne Änderung des einen oder der mehreren Steuerungsparameter, wenn die Produktionsdaten die Leistungsanforderung (194) erfüllen.

9. Verfahren nach Anspruch 8, ferner umfassend:
n) Ändern des einen oder der mehreren Steuerungsparameter, wenn die Produktionsdaten die Leistungsanforderung nicht erfüllen, und Wiederholen der Schritte (j)-(l) (196).

10. Verfahren nach einem der vorhergehenden Ansprüche, wobei mindestens eines von Folgendem (A) bis (E) umfasst ist:
(A) der robotische Montagebetrieb weist eine Montagebasis (138) mit einem ersten Teil (136) darauf und eine Roboterbasis (142) mit einem zweiten Teil (164) darauf auf, wobei das Steuerungssystem das zweite Teil mit dem ersten Teil zusammenfügt, während die Montagebasis und die Roboterbasis sich beide bewegen;
(B): der eine oder die mehreren Steuerungsparameter umfassen eine Sensoreigenschaft, eine Robotereigenschaft oder eine Anwendungsaufgabenspezifikation;
(C): die Sensoreigenschaft umfasst eine Abtastrate, eine Genauigkeit, ein Rauschen oder eine Verzögerung, die Robotereigenschaft umfasst ein Robotermodell oder eine Werkzeugnutzlast und die Anwendungsaufgabenspezifikation umfasst einen Pfad oder Wegpunkte;
(D): der eine oder die mehreren Steuerungsparameter umfassen eine Verzögerungszeit oder eine Roboterbewegung; und/oder
(E): das Steuerungsschema umfasst ein 2D-Vision-System, ein 3D-Vision-System, ein bildbasiertes Vision-System oder ein Kalman-Filter-Leitsystem.

11. Verfahren nach einem der vorhergehenden Ansprüche, wobei die Leistungsanforderung eine Geschwindigkeit, eine Beschleunigung, eine Montagetoleranz oder eine Zykluszeit umfasst.

12. Verfahren nach Anspruch 11, wobei der robotische Montagebetrieb eine Montagebasis (138) mit einem darauf basierenden ersten Teil (136) und eine Roboterbasis (142) mit einem darauf basierenden zweiten Teil (164) umfasst, wobei das Steuerungssystem das zweite Teil mit dem ersten Teil zusammenfügt, während sich sowohl die Montagebasis als auch die Roboterbasis bewegen, wobei der eine oder die mehreren Steuerungsparameter eine Sensoreigenschaft, eine Robotereigenschaft oder eine Anwendungsaufgabenspezifikation umfassen, und wobei das Steuerungsschema ein 2D-Vision-System, ein 3D-Vision-System, ein bildbasiertes Vision-System oder ein Kalman-Filter-Leitsystem umfasst.

## Revendications

1. Procédé pour déterminer un système de commande pour une opération d'assemblage robotique, le procédé comprenant les étapes suivantes :
a) sélectionner automatiquement un ou plusieurs paramètres de commande (170) ;
b) sélectionner automatiquement un schéma de commande (172) ;
c) simuler des performances de l'opération d'assemblage robotique en utilisant les un ou plusieurs paramètres de commande et le schéma de commande (174) ;
d) déterminer automatiquement si le schéma de commande satisfait à une exigence de performance à partir d'un résultat de la simulation (176) ;
e) répéter les étapes (b) à (d) avec un nouveau schéma de commande si l'exigence de performance n'est pas satisfaite (178) ;
le procédé comprenant en outre les étapes suivantes :
j) procéder à l'opération d'assemblage robotique dans un cycle de production si le schéma de commande satisfait à l'exigence de performance (188) ;
k) collecter des données de production sur deux itérations de cycles de production (190) ;
l) déterminer si les données de production varient entre les deux cycles de production (192) ;
m) répéter le cycle de production sans changer les un ou plusieurs paramètres de commande si les données de production varient de moins d'un seuil (194) ;
n) changer les un ou plusieurs paramètres de commande si les données de production varient davantage que le seuil, et répéter le cycle de production (196),
où le changement des un ou plusieurs paramètres de commande comprend la réduction de la pondération appliquée à un capteur non calibré (132) et l'augmentation de la pondération appliquée à un autre capteur (132).

2. Procédé selon la revendication 1, comprenant en outre les étapes suivantes :
f) procéder à l'opération d'assemblage robotique dans un cycle à vide si le schéma de commande satisfait à l'exigence de performance (180) ;
g) collecter des données d'essai lors du cycle à vide (182) ; et
h) déterminer si les données d'essai satisfont à l'exigence de performance (184).

3. Procédé selon la revendication 2, comprenant en outre les étapes suivantes :
i) modifier les un ou plusieurs paramètres de commande si les données d'essai ne satisfont pas à l'exigence de performance, et répéter les étapes (a) à (h) (186).

4. Procédé selon la revendication 3, comprenant en outre les étapes suivantes :
j) procéder à l'opération d'assemblage robotique dans un cycle de production si le schéma de commande satisfait à l'exigence de performance (188) ;
k) collecter des données de production lors du cycle de production (190) ; et
l) déterminer si les données de production satisfont à l'exigence de performance (192).

5. Procédé selon la revendication 4, comprenant en outre l'étape suivante :
m) répéter les étapes (j) à (l) sans changer les un ou plusieurs paramètres de commande si les données de production satisfont à l'exigence de performance (194).

6. Procédé selon la revendication 5, comprenant en outre les étapes suivantes :
n) changer les un ou plusieurs paramètres de commande si les données de production ne satisfont pas l'exigence de performance et répéter les étapes (j) à (1) (196).

7. Procédé selon l'une quelconque des revendications précédentes, comprenant en outre les étapes suivantes :
j) procéder à l'opération d'assemblage robotique dans un cycle de production si le schéma de commande satisfait à l'exigence de performance (188) ;
k) collecter des données de production lors du cycle de production (190) ; et
l) déterminer si les données de production satisfont à l'exigence de performance (192), de préférence où les données de production comprennent une vitesse de robot (106), une accélération, une position, une erreur de suivi, une force de contact ou un temps de stabilisation.

8. Procédé selon la revendication 7, comprenant en outre l'étape suivante :
m) répéter les étapes (j) à (1) sans modifier les un ou plusieurs paramètres de commande si les données de production satisfont à l'exigence de performance (194).

9. Procédé selon la revendication 8, comprenant en outre les étapes suivantes :
n) changer les un ou plusieurs paramètres de commande si les données de production ne satisfont pas à l'exigence de performance, et répéter les étapes (j) à (l) (196).

10. Procédé selon l'une quelconque des revendications précédentes, dans lequel au moins l'un des éléments (A) à (E) suivants est satisfait :
(A) l'opération d'assemblage robotique comprend une base d'assemblage (138) avec une première pièce (136) sur celle-ci et une base robotique (142) avec une seconde pièce (164) sur celle-ci, le système de commande assemblant la seconde pièce avec la première pièce tandis que la base d'assemblage et la base robotique sont toutes deux en mouvement ;
(B) : les un ou plusieurs paramètres de commande comprennent une caractéristique de capteur, une caractéristique de robot ou une spécification de tâche d'application ;
(C) : la caractéristique du capteur comprend une fréquence d'échantillonnage, une précision, un bruit ou un retard, la caractéristique du robot comprend un modèle de robot ou une charge utile d'outil, et la spécification de la tâche d'application comprend un chemin ou des points de passage ;
(D) : les un ou plusieurs paramètres de commande comprennent un temps de retard ou un mouvement du robot ; et/ou
(E) : le schéma de commande comprend un système de vision 2D, un système de vision 3D, un système de vision basé sur l'image ou un système de guidage par filtre de Kalman.

11. Procédé selon l'une quelconque des revendications précédentes, dans lequel l'exigence de performance comprend une vitesse, une accélération, une tolérance d'assemblage ou un temps de cycle.

12. Procédé selon la revendication 11, dans lequel l'opération d'assemblage robotique comprend une base d'assemblage (138) avec une première pièce (136) sur celle-ci et une base robotique (142) avec une seconde pièce (164) sur celle-ci, le système de commande assemblant la seconde pièce avec la première pièce tandis que la base d'assemblage et la base robotique sont toutes deux en mouvement, les un ou plusieurs paramètres de commande comprennent une caractéristique de capteur, une caractéristique de robot ou une spécification de tâche d'application, et le schéma de commande comprend un système de vision 2D, un système de vision 3D, un système de vision basé sur l'image ou un système de guidage à filtre de Kalman.
